# EUROPÄISCHE PATENTSCHRIFT

(11) **EP 1 813 481 B1**
(45) Veröffentlichungstag und Bekanntmachung des Hinweises auf die Patenterteilung: **19.03.2008**
(21) Anmeldenummer: 06001520.3
(22) Anmeldetag: 25.01.2006
(51) Int. Cl.: B60R 21/20

(54) **Vorrichtung zum Zusammenhalten eines Luftsackpakets**
Device to hold an airbag package
Dispositif pour tenir un paquet d'airbag

(43) Veröffentlichungstag der Anmeldung: 01.08.2007
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(56) Entgegenhaltungen:
- EP-A- 0 640 514
- EP-A- 0 865 972
- EP-A- 1 338 482
- WO-A-20/05005208

## Beschreibung

Die Erfindung betrifft eine Vorrichtung zum Zusammenhalten eines zu einem Paket zusammengefalteten Luftsacks.

Eine Vorrichtung der eingangs genannten Art ist grundsätzlich bekannt und beispielsweise als strumpf- oder schlauchförmige Hülle ausgebildet, die das zusammenzuhaltende Luftsackpaket zumindest annähernd vollständig umschließt. Zur Herstellung der Hülle wird ein längliches Gewebematerialstück mittels einer in Längsrichtung verlaufenden Naht zu einem Schlauch zusammengefügt, wobei die Naht üblicherweise geschweißt oder genäht ist. Gleichzeitig kann die Naht als Solltrennstelle, z.B. als Reißnaht, ausgelegt sein, um die Entfaltung des Luftsackpakets beim Aufblasen des Luftsacks zu erleichtern. Alternativ oder zusätzlich kann zu diesem Zweck eine Perforation der Hülle vorgesehen sein.

Aus der EP-A-1338482 ist eine Vorrichtung mit den Merkmalen des Oberbegriffs des Anspruchs 1 bekannt.

Der Erfindung liegt die Aufgabe zugrunde, eine Vorrichtung zum Zusammenhalten eines zu einem Paket zusammengefalteten Luftsacks zu schaffen, die mit einem geringeren wirtschaftlichen Aufwand herstellbar ist.

Zur Lösung der Aufgabe ist eine Vorrichtung mit den Merkmalen des Anspruchs 1 vorgesehen.

Der Erfindung liegt der Gedanke zugrunde, im Vergleich zu einer herkömmlichen strumpf- oder schlauchartigen Luftsackverpackung den zur Herstellung der Verpackung erforderlichen Materialverbrauch zu reduzieren. Der geringste Materialverbrauch einer strumpf- oder schlauchförmigen Luftsackverpackung ergibt sich grundsätzlich aus der Länge und dem Umfang des zu umhüllenden Luftsackpakets sowie aus dem zum Zusammennähen bzw. Zusammenschweißen des Verpackungsmaterials erforderlichen Zusatzmaterial.

Die erfindungsgemäße Idee besteht darin, das zusammenzuhaltende Luftsackpaket nicht vollständig mit Verpackungsmaterial zu umhüllen, sondern lediglich bereichsweise durch mehrere quer zur Längsrichtung des Luftsackpakets orientierte Querbänder zusammenzuhalten, die in Längsrichtung des Luftsackpakets zueinander versetzt sind und die jeweils mit zwei sich in Längsrichtung des zusammenzuhaltenden Luftsackpakets erstreckenden Längsbändern verbunden sind. Die Querbänder sind in zwei Gruppen unterteilt, und es ist erfindungsgemäß vorgesehen, dass die Querbänder der einen Gruppe auf der einen Seite und die Querbänder der anderen Gruppe auf der anderen Seite des zusammenzuhaltenden Luftsackpakets verlaufen.

Erfindungsgemäß sind die Querbänder jeweils mit voneinander wegweisenden Rändern der Längsbänder verbunden, wobei die Querbänder der einen Gruppe und die Querbänder der anderen Gruppe auf einander abgewandten Seiten der Längsbänder verlaufen. Die Längsbänder erstrecken sich mit anderen Worten also zwischen den Querbändern der einen Gruppe und den Querbändern der anderen Gruppe. Die Querbänder werden also nicht von außen liegenden, sondern gewissermaßen von innen liegenden Längsbändern getragen. Es stehen folglich keine außen liegenden Längsbänder von der Vorrichtung ab, wodurch eine kompaktere Bauweise der Vorrichtung erreicht wird.

Da sich die Querbänder entweder entlang der einen Seite oder der anderen Seite des Luftsackpakets erstrecken, braucht die Länge jedes Querbands etwa nur die Hälfte der Umfangslänge des zusammenzuhaltenden Luftsackpakets zu betragen. Auf diese Weise lässt sich bei der Herstellung der erfindungsgemäßen Vorrichtung eine Materialeinsparung erreichen, die je nach Breite der Längsbänder gegenüber herkömmlichen strumpf- oder schlauchförmigen Luftsackverpackungen bis zu etwa 40 % ausmachen kann.

Außerdem ist es nicht erforderlich, Material der erfindungsgemäßen Vorrichtung in irgendeiner Weise zusammenzunähen oder zu verschweißen. Dadurch kann die erfindungsgemäße Vorrichtung im Vergleich zu einer herkömmlichen strumpf- oder schlauchförmigen Pakethülle wesentlich einfacher hergestellt werden.

Durch die Materialeinsparung und die vereinfachte Herstellung lässt sich die erfindungsgemäße Vorrichtung im Ergebnis also wesentlich kostengünstiger fertigen.

Vorteilhafterweise ist die Vorrichtung aus einem flexiblen Material und insbesondere aus einem Gewebematerial, z.B. aus dem gleichen Material wie der Luftsack, gebildet. Dadurch ist nicht nur die Herstellung der Vorrichtung noch weiter vereinfacht, sondern die Vorrichtung weist auch flexible Eigenschaften auf, wodurch die Form eines durch die Vorrichtung zusammengehaltenen Luftsackpakets an den Raum angepasst werden kann, in welchem das Luftsackpaket eingebaut werden soll.

Zur Herstellung der Vorrichtung können in einem länglichen Stück eines flächigen flexiblen Materials mehrere quer zu der Längserstreckung des Materialstücks orientierte und zu den Längsrändern des Materialstücks beabstandete Schlitze in das Materialstück eingebracht werden, beispielsweise durch Schneiden oder Stanzen, um zwei sich entlang den Längsrändern erstreckende Längsbänder auszubilden, die durch mehrere quer zur Längsrichtung orientierte und in Längsrichtung versetzte Querbänder miteinander verbunden sind.

Anschließend wird ein Ende des Materialstücks derart durch mindestens zwei der Schlitze hindurchgefädelt, dass das Ende des Materialstücks auf einer ersten Seite der Querbänder der ersten Gruppe und auf einer von der ersten Seite abgewandten zweiten Seite der Querbänder der zweiten Gruppe vorbeigeführt wird. Nach dem Einbringen der Schlitze in das Materialstück, beispielsweise durch Schneiden oder Stanzen, wird das Materialstück mit anderen Worten durch sich selbst hindurchgefädelt, gewissermaßen also umgestülpt oder umgekrempelt, um die zunächst außen liegenden Längsbänder nach innen, d.h. zwischen die Querbänder, zu bringen.

Zum Umstülpen der Vorrichtung kann ein Hilfsmittel verwendet werden, beispielsweise ein Draht, eine Stange oder ein flexibles Flachband, welches nach dem Einbringen der Schlitze in das Materialstück in einer Einfädelrichtung durch mindestens zwei Schlitze derart in die Vorrichtung eingefädelt wird, dass das Hilfsmittel an einer ersten Seite der Querbänder der ersten Gruppe und an einer von der ersten Seite abgewandten Seite der Querbänder der zweiten Gruppe vorbeigeführt wird. Anschließend wird das durch die Schlitze hindurch geführte Hilfsmittel im Bereich eines in Einfädelrichtung liegenden Endes des Materialstücks mit diesem verbunden und entgegen der Einfädelrichtung wieder aus dem Materialstück herausgezogen, um das Ende des Materialstücks durch die Schlitze hindurch zu fädeln.

Wie bereits erwähnt wurde, braucht ein zusammenzuhaltendes Luftsackpaket lediglich zwischen den Querbändern hindurch gefädelt zu werden. Dabei wird das Luftsackpaket beim Einbringen in die Vorrichtung so an den Querbändern vorbeigeführt, dass die Querbänder der einen Gruppe jeweils an einer ersten Seite des Luftsackpakets und die Querbänder der anderen Gruppe jeweils an einer der ersten Seite abgewandten zweiten Seite des Luftsackpakets angeordnet sind. Dadurch wird auf einfache Weise eine zuverlässige Verpackung des Luftsackpakets erreicht.

Gemäß einer vorteilhaften Ausführungsform der erfindungsgemäßen Vorrichtung folgt in Längsrichtung gesehen auf ein Querband der einen Gruppe ein Querband der anderen Gruppe. Die Querbänder sind in Längsrichtung gesehen also abwechselnd hintereinander angeordnet. Auf diese Weise ergibt sich bei einer festgelegten Breite der Querbänder ein minimaler Abstand zwischen benachbarten Querbändern einer jeweiligen Gruppe. Des Weiteren liegen die Querbänder in Längsrichtung gesehen abwechselnd an entgegengesetzten Seiten des zusammenzuhaltenden Luftsackpakets an. Auf diese Weise wird nicht nur eine besonders kompakte Gestalt, sondern auch eine besonders hohe Stabilität des zusammengehaltenen Luftsackpakets erreicht.

Alternativ zu einer abwechselnden Anordnung der Querbänder der einen und der anderen Gruppe ist es grundsätzlich auch möglich, zwischen zwei Querbändern der einen Gruppe mehrere Querbänder der anderen Gruppe anzuordnen.

Gemäß einer besonders einfachen Ausführungsform der Vorrichtung sind die Querbänder im Wesentlichen rechtwinklig zu den Längsbändern orientiert.

Alternativ können jedoch auch schräg zu den Längsbändern verlaufende Querbänder vorgesehen sein. Ein Ziehen an den Längsbändern in entgegengesetzten Richtungen, gewissermaßen also eine Parallelverschiebung der Längsbänder, ermöglicht es, die Querbänder zumindest zeitweise rechtwinklig zu den Längsbändern auszurichten, wodurch die lichte Weite zwischen den Querbändern vergrößerbar ist. Diese vergrößerte lichte Weite zwischen den Querbändern erleichtert das Einführen eines Luftsacks in die Vorrichtung.

Bevorzugt ist die Breite aller Querbänder gleich. Bei einer abwechselnden Anordnung der Querbänder auf entgegengesetzten Seiten eines Luftsackpakets ist das Luftsackpaket somit in regelmäßigen Abständen an der einen und der anderen Seite abgestützt. Dadurch ist die Stabilität des Luftsackpakets noch weiter erhöht. Je schmaler die Breite der abwechselnd auf gegenüberliegenden Seiten des Luftsackpakets angeordneten Querbänder ist, desto größer ist die Anzahl der das Luftsackpaket umschließenden Abschnitte der Vorrichtung, welche letztlich die Kompaktheit des Luftsackpakets beeinflussen.

Alternativ kann die Breite der Querbänder in Längsrichtung gesehen auch variieren. Beispielsweise kann die Breite der Querbänder über die Länge der Vorrichtung gesehen zu- oder abnehmen. Denkbar ist auch, die Querbänder in einem mittleren Bereich der Vorrichtung schmaler als in den Endbereichen der Vorrichtung oder in den Endbereichen schmaler als in einem mittleren Bereich der Vorrichtung auszubilden. Möglich ist außerdem eine Variante, bei der die Querbänder der einen Gruppe eine andere Breite als die Querbänder der anderen Gruppe aufweisen, wobei die Breite der Querbänder innerhalb einer Gruppe jeweils konstant sein oder ebenfalls variieren kann.

Gemäß einer weiteren Ausführungsform ist die Länge, d.h. also die Abmessung quer zur Längserstreckung der Vorrichtung, aller Querbänder im Wesentlichen gleich. Dies führt dazu, dass ein durch die Vorrichtung zusammengehaltenes Luftsackpaket einen in Längsrichtung des Luftsackpakets gesehen im Wesentlichen konstanten Durchmesser aufweist.

Alternativ kann die Länge der Querbänder in Längsrichtung der Vorrichtung gesehen variieren. Beispielsweise können die Querbänder im Bereich eines Endes der Vorrichtung länger als im übrigen Bereich der Vorrichtung ausgebildet sein. In diesem Fall kann z.B. auch ein mit dem zusammenzuhaltenden Luftsack verbundener Gasgenerator von der Vorrichtung umschlossen werden.

Weiterer Gegenstand der Erfindung ist außerdem ein Luftsackmodul für ein Kraftfahrzeug mit einem aufblasbaren Luftsack, welcher im Montagezustand zu einem Paket zusammengefaltet und durch eine Vorrichtung der voranstehend beschriebenen Art zusammengehalten ist, wobei der Luftsack zwischen den Querbändern der beiden Gruppen angeordnet ist.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine erste Ausführungsform einer erfindungsgemäßen Vorrichtung;
- Fig. 2: die Vorrichtung von Fig. 1 mit einem Luftsackpaket;
- Fig. 3: eine zweite Ausführungsform einer erfindungsgemäßen Vorrichtung in einem Vormontagezustand;
- Fig. 4: die Vorrichtung von Fig. 3 in einem zur Aufnahme eines Luftsackpakets bereiten Zustand; und
- Fig. 5: die Vorrichtung von Fig. 3 und 4 mit einem Luftsackpaket.

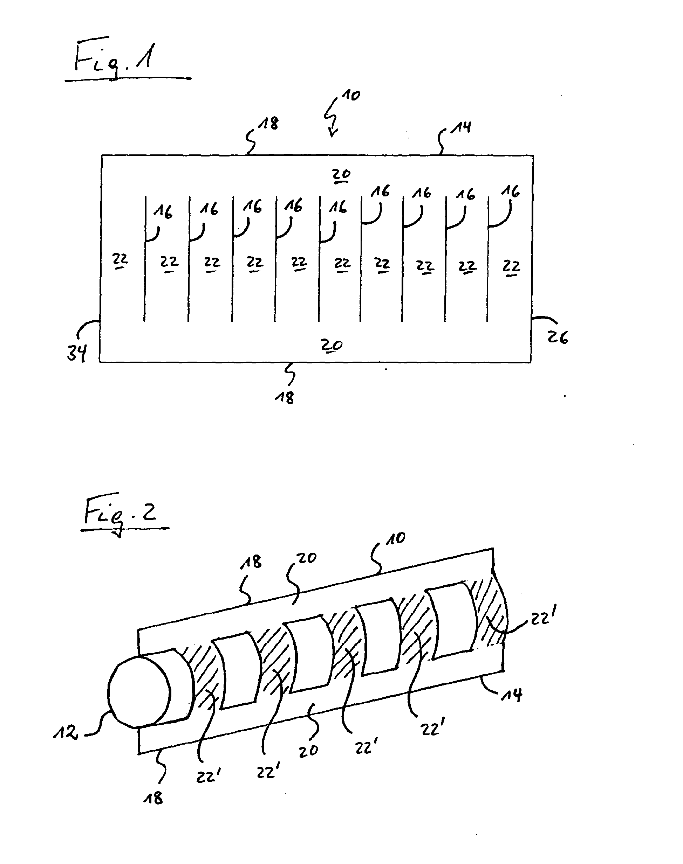

Die in Fig. 1 dargestellte erste Variante einer erfindungsgemäßen Vorrichtung 10 zum Zusammenhalten eines zu einem Paket 12 zusammengefalteten Luftsacks umfasst ein flächiges Materialstück 14, welches ein flexibles Material, wie z.B. ein Gewebematerial, aufweist. Das Materialstück 14 ist im Wesentlichen rechteckig ausgebildet, wobei die Länge des Materialstücks 14 an die Länge des zusammenzuhaltenden Luftsackpakets 12 angepasst ist.

In das Materialstück 14 sind mehrere, im vorliegenden Ausführungsbeispiel neun, Schlitze 16 eingebracht, beispielsweise eingestanzt oder eingeschnitten. Die Schlitze 16 sind quer zur Längserstreckung des Materialstücks 14 orientiert und parallel zueinander über die Länge des Materialstücks 14 verteilt angeordnet.

Dabei sind die Schlitze 16 nicht nur untereinander, sondern auch zu den beiden Längsrändern 18 des Materialstücks 14 beabstandet. Durch die Schlitze 16 sind auf diese Weise zwei zueinander beabstandete und entlang den Längsrändern 18 verlaufende Längsbänder 20 definiert, welche durch mehrere, im vorliegenden Ausführungsbeispiel 10, quer zu den Längsbändern 20 verlaufende Querbänder 22 miteinander verbunden sind.

Im vorliegenden Ausführungsbeispiel weisen alle Querbänder 22 die gleiche Breite und Länge auf. Unter der Länge eines Querbands 22 wird hier die Abmessung des Querbands 22 quer zur Längserstreckung des Materialstücks 14 verstanden. Die Länge eines Querbands 22 ist somit durch die Länge der das Querband 22 begrenzenden Schlitze 16 definiert. Die Breite eines Querbands 22 ist dagegen durch den Abstand der das Querband 22 begrenzenden Schlitze 16 definiert.

Grundsätzlich ist es auch möglich, die Breiten und Längen der Querbänder 22 zu variieren. Um im Falle von Querbändern 22, deren Länge im Bereich der einen Schmalseite des Materialstücks 14 größer als im Bereich der entgegengesetzten Schmalseite ist, eine über die Länge der Vorrichtung 10 gleich bleibende Breite der Längsbänder 20 sicher zustellen, kann anstelle einer rechteckigen Grundform des Materialstücks 14 eine trapezförmige Form verwendet werden.

Zum Einbringen des zusammenzuhaltenden Luftsacks in die Vorrichtung 10 wird der Luftsack derart durch die Schlitze 16 hindurch und an den Querbändern 22 vorbeigeführt, dass die Querbänder 22 abwechselnd an der einen Seite und an der anderen Seite des Luftsackpakets 12 anliegen (Fig. 2). Der Luftsack wird also gewissermaßen wie ein Webschiffchen von abwechselnden Seiten her durch die Schlitze 16 hindurch gefädelt.

Dies führt zu einer Unterteilung der Querbänder 22 in zwei Gruppen, wobei die Querbänder 22' der einen Gruppe, die in Fig. 2 schraffiert dargestellt sind, auf der einen Seite des Luftsackpakets 12 und die in Fig. 2 nicht erkennbaren Querbänder 22" der anderen Gruppe auf der entgegengesetzten Seite des Luftsackpakets 12 verlaufen. Aufgrund des Einfädelns des Luftsackpakets von abwechselnden Seiten durch die Schlitze 16 sind auch die Querbänder 22' der einen Gruppe und die Querbänder 22" der anderen Gruppe in Längsrichtung der Vorrichtung 10 gesehen jeweils abwechselnd angeordnet.

Um die Entfaltung des Luftsackpakets 12 beim Aufblasen des Luftsacks zu erleichtern ist eine in den Figuren nicht dargestellte Solltrennstelle, beispielsweise eine Perforation, in den Querbändern 22 einer Gruppe oder beider Gruppen vorgesehen.

Wie in Fig. 2 ferner zu erkennen ist, stehen die Längsbänder 20 der Vorrichtung 10 bei eingefädeltem Luftsackpaket 12 nach außen ab.

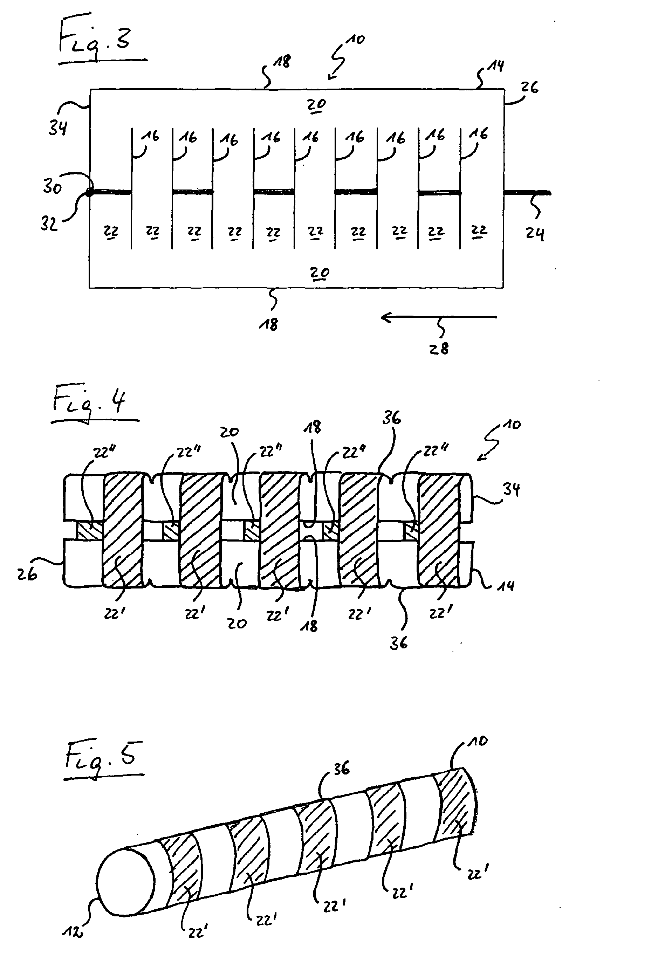

In Fig. 3 bis 5 ist eine zweite Variante der erfindungsgemäßen Vorrichtung 10 zum Zusammenhalten eines Luftsackpakets 12 gezeigt, bei welcher die Längsbänder 20 nicht von dem Luftsackpaket 12 abstehen. Diese zweite Vorrichtungsvariante geht von der voranstehend beschriebenen ersten Variante aus, weshalb bau- oder funktionsgleiche Komponenten mit den bereits eingeführten Bezugszeichen bezeichnet werden.

Wie in Fig. 3 zu erkennen ist, umfasst auch die zweite Variante der erfindungsgemäßen Vorrichtung 10 ein beispielsweise aus einem Gewebematerial gebildetes Materialstück 14, welches in einem Vormontagezustand eine flächige, im Wesentlichen rechteckige Grundform aufweist.

In der bereits in Verbindung mit Fig. 1 beschriebenen Art und Weise sind in das Materialstück 14 mehrere, im dargestellten Ausführungsbeispiel neun, Schlitze 16 eingebracht, beispielsweise eingeschnitten oder eingestanzt, wodurch zwei sich entlang den Längsrändern 18 des Materialstücks 14 erstreckende Längsbänder 20 ausgebildet sind, die durch mehrere, im dargestellten Ausführungsbeispiel zehn, quer und insbesondere rechtwinklig zu den Längsbändern 20 orientierte Querbänder 22 miteinander verbunden sind.

Im Unterschied zu der voranstehend beschriebenen ersten Vorrichtungsvariante wird das Luftsackpaket 12 jedoch nicht in diesem flächigen Vormontagezustand des Materialstücks 14 durch die Schlitze 16 hindurchgefädelt.

Statt dessen wird zunächst ein Hilfsmittel 24, welches beispielsweise ein Flachband, ein Draht oder eine Stange sein kann, von einer ersten Schmalseite 26 des Materialstücks 14 her in einer Einfädelrichtung 28 durch die Schlitze 16 hindurchgefädelt, und zwar wie nach Art eines Webschiffchens abwechselnd von der einen Seite und der anderen Seite des Materialstücks 14, so dass das Hilfsmittel 24, wie in Fig. 3 gezeigt ist, abwechselnd vor bzw. hinter den Querbändern 22 durch die Vorrichtung 10 hindurch läuft.

Ein in Einfädelrichtung 28 weisendes Kopfende 30 des vollständig durch die Vorrichtung 10 hindurch gefädelten Hilfsmittels 24 wird sodann an einem Befestigungspunkt 32, der sich im Bereich einer der ersten Schmalseite 26 entgegengesetzten zweiten Schmalseite 34 befindet, mit dem Materialstück 14 verbunden.

Anschließend wird das Hilfsmittel 24 entgegen der Einfädelrichtung 28 wieder aus dem Materialstück 14 herausgezogen, wobei das Ende des Materialstücks 14, in dessen Bereich das Kopfende 30 des Hilfsmittels 24 befestigt ist, zusammen mit dem Hilfsmittel 24 durch die Schlitze 16 hindurch gezogen wird. Auf diese Weise wird das Materialstück 14 also durch sich selbst hindurch gefädelt, gewissermaßen also von innen nach außen umgekrempelt bzw. umgestülpt. Durch diesen Umstülpvorgang wird die Vorrichtung 10 in ihren endgültigen, zur Aufnahme eines Luftsackpakets 12 bereiten Zustand gebracht, in welchem das Hilfsmittel 24 wieder von dem Materialstück 14 gelöst wird.

Wie in Fig. 4 gezeigt ist, verlaufen die Längsbänder 20 im endgültigen Zustand der Vorrichtung 10 zwischen den Querbändern 22, d.h. gewissermaßen also im Inneren der Vorrichtung 10. Eine erste Gruppe von Querbändern 22' verläuft dabei auf der einen Seite der Längsbänder 20, während eine zweite Gruppe von Querbändern 22" auf der anderen Seite der Längsbänder 20 verläuft.

Aufgrund der Einfädelung des Hilfsmittels 24 von abwechselnden Seiten des Materialstücks 14 durch die Schlitze 16 sind die Querbänder 22', 22" in Längsrichtung der Vorrichtung gesehen abwechselnd angeordnet. Die Bandränder, an denen die Querbänder 22 in die Längsbänder 20 übergehen, sind nunmehr voneinander abgewandt, d.h. sie bilden in diesem Zustand gewissermaßen die Außenränder 36 der Längsbänder 20.

Dagegen sind die Längsränder 18 des Materialstücks 14 einander zugewandt. In der in Fig. 4 dargestellten Situation weisen die Längsränder 18 einen Abstand zueinander auf. Je nach Breite der Längsbänder 20 und Länge der Querbänder 22 können die Längsbänder 20 aber auch einander überlappen.

Der zusammenzuhaltende Luftsack kann nun in die durch die Querbänder 22 gebildeten Schlaufen eingefädelt werden, wobei der Luftsack wahlweise zwischen den Längsbändern 20 und den Querbändern 22' der einen Gruppe oder zwischen den Längsbändern 20 und den Querbändern 22" der anderen Gruppe in die Vorrichtung 10 eingeführt wird. In Fig. 5 ist ein durch die Vorrichtung 10 gemäß der zweiten Variante zusammengehaltenes Luftsackpaket 12 dargestellt, welches sich zwischen den Längsbändern 20 und den Querbändern 22' der ersten Gruppe durch die Vorrichtung 10 hindurch erstreckt.

Um die Entfaltung des Luftsackpakets 12 beim Aufblasen des Luftsacks zu erleichtern ist wie bei der ersten Vorrichtungsvariante eine in den Figuren nicht dargestellte Solltrennstelle, beispielsweise eine Perforation, in den Querbändern 22 einer Gruppe oder beider Gruppen vorgesehen.

### Bezugszeichenliste

- 10: Vorrichtung
- 12: Luftsackpaket
- 14: Materialstück
- 16: Schlitz
- 18: Längsrand
- 20: Längsband
- 22: Querband
- 24: Hilfsmittel
- 26: Schmalseite
- 28: Einfädelrichtung
- 30: Kopfende
- 32: Befestigungspunkt
- 34: Schmalseite
- 36: Außenrand

## Patentansprüche

1. Vorrichtung (10) zum Zusammenhalten eines zu einem Paket (12) zusammengefalteten Luftsacks, mit zwei sich im Wesentlichen parallel zueinander und in einer Längsrichtung der Vorrichtung (10) erstreckenden Längsbändern (20), welche durch mehrere quer zu den Längsbändern (20) orientierte, in Längsrichtung zueinander versetzte und in zwei Gruppen unterteilte Querbänder (22) miteinander verbunden sind,
**dadurch gekennzeichnet, dass**
die Querbänder (22) jeweils mit voneinander weg weisenden Rändern (36) der Längsbänder (20) verbunden sind, wobei die Querbänder (22') der einen Gruppe und die Querbänder (22") der anderen Gruppe auf einander abgewandten Seiten der Längsbänder (20) verlaufen.

2. Vorrichtung (10) nach Anspruch 1,
**dadurch gekennzeichnet, dass**
in Längsrichtung gesehen auf ein Querband (22') der einen Gruppe ein Querband (22") der anderen Gruppe folgt.

3. Vorrichtung (10) nach Anspruch 1,
**dadurch gekennzeichnet, dass**
zwischen zwei Querbändern (22') der einen Gruppe mehrere Querbänder (22") der anderen Gruppe angeordnet sind.

4. Vorrichtung (10) nach einem der vorherigen Ansprüche,
**dadurch gekennzeichnet, dass**
die Querbänder (22) im Wesentlichen rechtwinklig zu den Längsbändern (20) orientiert sind.

5. Vorrichtung (10) nach einem der Ansprüche 1 bis 3,
**dadurch gekennzeichnet, dass**
die Querbänder (22) schräg zu den Längsbändern (20) verlaufen.

6. Vorrichtung (10) nach einem der vorherigen Ansprüche,
**dadurch gekennzeichnet, dass**
die Breite aller Querbänder (22) im Wesentlichen gleich ist.

7. Vorrichtung (10) nach einem der Ansprüche 1 bis 5,
**dadurch gekennzeichnet, dass**
die Breite der Querbänder (22) in Längsrichtung gesehen variiert.

8. Vorrichtung (10) nach einem der vorherigen Ansprüche,
**dadurch gekennzeichnet, dass**
die Länge aller Querbänder (22) im Wesentlichen gleich ist.

9. Vorrichtung (10) nach einem der Ansprüche 1 bis 7,
**dadurch gekennzeichnet, dass**
die Länge der Querbänder (22) in Längsrichtung gesehen variiert.

10. Luftsackmodul für ein Kraftfahrzeug mit einem aufblasbaren Luftsack, welcher im Montagezustand zu einem Paket (12) zusammengefaltet und durch eine Vorrichtung (10) nach einem der vorherigen Ansprüche zusammengehalten ist, wobei der Luftsack zwischen den Querbändern (22) der beiden Gruppen angeordnet ist.

11. Verfahren zur Herstellung einer Vorrichtung (10) zum Zusammenhalten eines zu einem Paket (12) zusammengefalteten Luftsacks, insbesondere zur Herstellung einer Vorrichtung (10) nach einem der vorherigen Ansprüche, bei dem aus einem länglichen Stück (14) eines flächigen flexiblen Materials mehrere quer zu der Längserstreckung des Materialstücks (14) orientierte und zu den Längsrändern (18) des Materialstücks (14) beabstandete Schlitze (16) in das Materialstück (14) eingebracht werden, um zwei sich entlang den Längsrändern (18) erstreckende Längsbänder (20) auszubilden, die durch mehrere quer zur Längsrichtung orientierte Querbänder (22) miteinander verbunden sind, welche eine erste und eine zweite Gruppe bilden,
**dadurch gekennzeichnet, dass**
ein Ende des Materialstücks (14) derart durch mindestens zwei der Schlitze (16) hindurch gefädelt wird, dass das Ende des Materialstücks (14) auf einer ersten Seite der Querbänder (22') der ersten Gruppe und auf einer von der ersten Seite abgewandten zweiten Seite der Querbänder (22") der zweiten Gruppe vorbeigeführt wird.

12. Verfahren nach Anspruch 11,
**dadurch gekennzeichnet, dass**
nach dem Einbringen der Schlitze (16) in das Materialstück (14) ein Hilfsmittel (24) in einer Einfädelrichtung (28) durch mindestens zwei der Schlitze (16) derart eingefädelt wird, dass das Hilfsmittel (24) an einer ersten Seite der Querbänder (22') der ersten Gruppe und an einer von der ersten Seite abgewandten Seite der Querbänder (22") der zweiten Gruppe vorbeigeführt wird,
das durch die Schlitze (16) hindurch geführte Hilfsmittel (24) im Bereich eines in Einfädelrichtung (28) liegenden Endes des Materialstücks (14) mit diesem verbunden wird, und
das Hilfsmittel (24) entgegen der Einfädelrichtung (28) wieder aus dem Materialstück (14) herausgezogen wird, um das Ende des Materialstücks (14) durch die Schlitze (16) hindurch zu fädeln.

## Claims

1. An apparatus (10) for the holding together of an airbag folded together to form a package (12) comprising two longitudinal bands (20) which extend substantially parallel to one another and in a longitudinal direction of the apparatus (10) and which are connected to one another by a plurality of transverse bands (22) oriented transversely to the longitudinal bands (20), offset to one another in the longitudinal direction and divided into two groups,
**characterized in that**
the transverse bands (22) are each connected to margins (36) of the longitudinal bands (20) facing away from one another, with the transverse bands (22') of the one group and the transverse bands (22") of the other group extending on mutually remote sides of the longitudinal bands (20).

2. An apparatus (10) in accordance with claim 1, **characterized in that**, when viewed in the longitudinal direction, a transverse band (22') of the one group is followed by a transverse band (22") of the other group.

3. An apparatus (10) in accordance with claim 1, **characterized in that** there are arranged between two transverse bands (22') of the one group, a plurality of transverse bands (22") of the other group.

4. An apparatus (10) in accordance with any one of the preceding claims, **characterized in that** the transverse bands (22) are oriented substantially at right angles to the longitudinal bands (20).

5. An apparatus (10) in accordance with any one of the claims 1 to 3, **characterized in that** the transverse bands (22) extend obliquely to the longitudinal bands (20).

6. An apparatus (10) in accordance with any one of the preceding claims, **characterized in that** the width of all the transverse bands (22) is substantially the same.

7. An apparatus (10) in accordance with any one of the claims 1 to 5, **characterized in that** the width of the transverse bands (22) varies when viewed in the longitudinal direction.

8. An apparatus (10) in accordance with any one of the preceding claims, **characterized in that** the length of all the transverse bands (22) is substantially the same.

9. An apparatus (10) in accordance with any one of the claims 1 to 7, **characterized in that** the length of the transverse bands (22) varies when viewed in the longitudinal direction.

10. An airbag module for a motor vehicle comprising an inflatable airbag which is folded together to form a package (12) in the installed state and is held together by an apparatus (10) in accordance with any one of the preceding claims, with the airbag being arranged between the transverse bands (22) of the two groups.

11. A method for the manufacture of an apparatus (10) for the holding together of an airbag folded together to form a package (12), in particular for the manufacture of an apparatus (10) in accordance with any one of the preceding claims, wherein a plurality of slits (16) are introduced into the piece of material (14) from an elongate piece (14) of an areal flexible material, said slits being oriented transversely to the longitudinal extent of the piece of material (14) and spaced apart from the longitudinal margins (18) of the piece of material (14), in order to form two longitudinal bands (20) which extend along the longitudinal margins (18) and are connected to one another by a plurality of transverse bands (22) which are oriented transversely to the longitudinal direction and form a first group and a second group
**characterized in that**
an end of the piece of material (14) is threaded through at least two of the slits (16) such that the end of the piece of material (14) is led past on a first side of the transverse bands (22') of the first group and on a second side of the transverse bands (22") of the second group remote from the first side.

12. A method in accordance with claim 11, **characterized in that**,
after the introduction of the slits (16) into the piece of material (14), an aid means (24) is threaded through at least two of the slits (16) in a thread-in direction (28) such that the aid means (24) is led past a first side of the transverse bands (22') of the first group and past a side of the transverse bands (22") of the second group remote from the first side;
**in that** aid means (24) guided through the slits (16) are connected to the material piece (14) in the region of an end of the piece of material (14) disposed in the thread-in direction (28); and
**in that** the aid means (24) is pulled out of the piece of material (14) again opposite to the thread-in direction (28) in order to thread the end of the piece of material (14) through the slits (16).

## Revendications

1. Dispositif (10) de contention d'un sac gonflable de sécurité plié en un paquet (12), comprenant deux bandes longitudinales (20) s'étendant essentiellement parallèlement l'une à l'autre et dans une direction longitudinale du dispositif (10), reliées l'une à l'autre par l'intermédiaire de plusieurs bandes transversales (22) orientées transversalement aux bandes longitudinales (20), décalées les unes par rapport aux autres dans le sens longitudinal et divisées en deux groupes,
**caractérisé en ce que** les bandes transversales (22) sont reliées chacune à des bords (36) des bandes longitudinales (20) dirigés dans des directions opposées, les bandes transversales (22') de l'un des groupes et les bandes transversales (22") de l'autre des groupes s'étendant depuis des côtés opposés des bandes longitudinales (20).

2. Dispositif (10) selon la revendication 1, **caractérisé en ce que**, vu dans le sens longitudinal, une bande transversale (22') de l'un des groupes succède à une bande transversale (22") de l'autre groupe.

3. Dispositif (10) selon la revendication 1, **caractérisé en ce que** plusieurs bandes transversales (22") de l'autre groupe sont disposées entre deux bandes transversales (22') de l'un des groupes.

4. Dispositif (10) selon l'une des revendications précédentes, **caractérisé en ce que** les bandes transversales (22) sont orientées essentiellement perpendiculairement aux bandes longitudinales (20).

5. Dispositif (10) selon l'une des revendications 1 à 3, **caractérisé en ce que** les bandes transversales (22) s'étendent obliquement aux bandes longitudinales (20).

6. Dispositif (10) selon l'une des revendications précédentes, **caractérisé en ce que** la largeur de toutes les bandes transversales (22) est essentiellement égale.

7. Dispositif (10) selon l'une des revendications 1 à 5, **caractérisé en ce que** la largeur des bandes transversales (22) varie, vue dans le sens longitudinal.

8. Dispositif (10) selon l'une des revendications précédentes, **caractérisé en ce que** la longueur de toutes les bandes transversales (22) est essentiellement égale.

9. Dispositif (10) selon l'une des revendications 1 à 7, **caractérisé en ce que** la longueur des bandes transversales (22) varie, vue dans le sens longitudinal.

10. Module de sac gonflable de sécurité pour un véhicule automobile, comprenant un sac gonflable de sécurité qui, à l'état monté, est plié en un paquet (12) et est contenu ainsi par un dispositif (10) selon l'une quelconque des revendications précédentes, le sac gonflable de sécurité étant disposé entre les bandes transversales (22) des deux groupes.

11. Procédé de fabrication d'un dispositif (10) de contention d'un sac gonflable de sécurité plié en un paquet (12), en particulier pour la fabrication d'un dispositif (10) selon l'une quelconque des revendications précédentes, dans lequel, à partir d'une pièce allongée (14) d'un matériau plan flexible, plusieurs fentes (16) orientées transversalement à l'extension longitudinale de la pièce de matériau (14), et espacées des bords longitudinaux (18) de la pièce de matériau (14), sont faites dans la pièce de matériau (14), de manière à former deux bandes longitudinales (20) s'étendant le long des bords longitudinaux (18), bandes qui sont ainsi reliées l'une à l'autre par l'intermédiaire de plusieurs bandes transversales (22) orientées transversalement à la direction longitudinale, ces bandes formant un premier groupe et un deuxième groupe,
**caractérisé en ce qu'**une extrémité de la pièce de matériau (14) est enfilée à travers au moins deux des fentes (16) de manière telle que l'extrémité de la pièce de matériau (14) passe devant un premier côté des bandes transversales (22') du premier groupe, et devant un deuxième côté éloigné du premier côté des bandes transversales (22") du deuxième groupe.

12. Procédé selon la revendication 11, **caractérisé en ce qu'**après l'aménagement des fentes (16) dans la pièce de matériau (14), un moyen auxiliaire (24) est enfilé dans une direction d'enfilement (28) à travers au moins deux des fentes (16) de manière telle que le moyen auxiliaire (24) passe devant un premier côté des bandes transversales (22') du premier groupe et devant un côté éloigné de ce premier côté des bandes transversales (22") du deuxième groupe,
que le moyen auxiliaire (24) enfilé à travers les fentes (16) est relié à la pièce de matériau (14) au niveau d'une extrémité de celle-ci, qui est disposée dans la direction d'enfilement (28), et
que le moyen auxiliaire (24) est retiré de la pièce de matériau (14) à l'encontre de la direction d'enfilement (28), de manière à enfiler l'extrémité de la pièce de matériau (14) à travers les fentes (16).
